(19) Europäisches Patentamt
European Patent Office
Office européen des brevets

(11) **EP 4 708 717 A1**

(12) **EUROPEAN PATENT APPLICATION**

(43) Date of publication:
**11.03.2026  Bulletin 2026/11**

(21) Application number: **25200527.7**

(22) Date of filing: **05.09.2025**

(51) International Patent Classification (IPC):
***H04B 7/06*** (2006.01)

(52) Cooperative Patent Classification (CPC):
**H04B 7/0617**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.09.2024  IN 202411067372**

(71) Applicant: **Nokia Solutions and Networks Oy
02610 Espoo (FI)**

(72) Inventors:
 • **BUDAMA, Sree Charan Teja Reddy
  560045 Bangalore (IN)**
 • **KERAHALLI, Swetha Kumari
  562157 Bangalore (IN)**
 • **KADADI, Shivanand
  560065 Bengaluru (IN)**

(74) Representative: **Nokia EPO representatives
Nokia Technologies Oy
Karakaari 7
02610 Espoo (FI)**

(54) **AN APPARATUS AND A METHOD FOR A DEVICE FOR A WIRELESS COMMUNICATION SYSTEM**

(57)    An apparatus (100) for a device (10) for a wireless communication system (1000). The apparatus (100) is comprising at least one processor, and at least one memory storing instructions that, when executed by the at least one processor, cause the device (10) to: receive first information (I-1) characterizing one or more parameters of a beamformer (BF-1) associated with a specific beamforming technique (BF-TECH-1) of a plurality of different beamforming techniques (BF-TECH-1, BF-TECH-2, BF-TECH-3). Determine, based at least on the first information (I-1), second information (I-2) characterizing the beamformer (BF-1) using a common representation (COM-REP) for different beamformers associated with respective different beamforming techniques (BF-TECH-1, BF-TECH-2, BF-TECH-3).

**Fig. 3**

RECEIVE FIRST INFORMATION CHARACTERIZING ONE OR MORE PARAMETERS OF BEAMFORMER ASSOCIATED WITH SPECIFIC BEAMFORMING TECHNIQUE

I-1

DETERMINE SECOND INFORMATION CHARACTERIZING BEAMFORMER USING COMMON REPRESENTATION FOR DIFFERENT BEAMFORMERS ASSOCIATED WITH DIFFERENT BEAMFORMING TECHNIQUES

I-2

USE SECOND INFORMATION

I-2

**Description**

**Field of the Disclosure**

The disclosure relates to an apparatus for a device for a wireless communication system.

The disclosure further relates to a method for a device for a wireless communication system.

**Background**

Communication systems such as, e.g., wireless communication systems may be used for wireless exchange of information between two or more entities, e.g., comprising one or more terminal device, e.g., user equipment (UE), and one or more network devices such as, e.g., base stations.

In some conventional approaches, beamforming techniques are used, e.g., to direct the transmission of radio frequency signals in one or more beams, thereby increasing a signal strength and reception quality at one or more intended receivers, e.g., while reducing interference to other potential receivers or entities.

**Summary**

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some examples relate to an apparatus for a device for a wireless communication system, the apparatus comprising at least one processor, and at least one memory storing instructions that, when executed by the at least one processor, cause the device to: receive first information characterizing one or more parameters of a beamformer associated with a specific beamforming technique of a plurality of different beamforming techniques, determine, based at least one the first information, second information characterizing the beamformer using a common representation for different beamformers associated with respective different beamforming techniques. In some examples, this enables to provide a common representation for beamformers of different beamforming techniques, thus, e.g., facilitating a processing of data related to the different beamformers.

In some examples, the wireless communication system may adhere to and/or may be based on some accepted (and/or planned) standard, such as, e.g. 3G, 4G, 5G, 6G, or some other wireless communication standard.

In some examples, the device for the wireless communication system may e.g. comprise or represent at least one of: a) a base station, e.g., gNB, or b) a distributed unit, DU, of a base station, or c) a device or entity for a Near-RT RIC (Near Real Time RAN Intelligent Controller), or d) a terminal device, e.g., user equipment, or e) another device for a wireless communication system.

In some examples, the common representation is characterized by a plurality of different beams and at least one coordinate for identifying a specific beam of the plurality of different beams. As an example, the common representation may, e.g., be characterized by a two-dimensional (2D-) array of different beams and two coordinates for identifying a specific beam of the plurality of different beams. In some examples, the plurality of different beams, e.g., the 2D-array of different beams, may be denoted as a "dictionary of beams".

In some examples, the instructions, when executed by the at least one processor, cause the device to: receive a plurality of parameters characterizing a first beamformer associated with a first beamforming technique based on a precoding matrix indicator, PMI, a channel state information reference signal resource indicator, CRI, and a layer indicator, LI, determine one or more parameters of the common representation corresponding to the first beamformer based on the plurality of parameters characterizing the first beamformer. This may, e.g., facilitate to transform a PMI-based beamformer to the common representation according to the disclosure, thus, e.g., enabling to process information associated with the PMI-based beamformer together with information associated with beamformers of other types, which may also be transformed into the common representation according to the disclosure.

In some examples, the instructions, when executed by the at least one processor, cause the device to: receive at least one parameter characterizing a second beamformer associated with a second beamforming technique based on synchronization signal burst, SSB, -based beamforming, determine one or more parameters of the common representation corresponding to the second beamformer based on the at least one parameter characterizing the second beamformer. This may, e.g., facilitate to transform an SSB-based beamformer to the common representation according to the disclosure.

In some examples, the instructions, when executed by the at least one processor, cause the device to: receive at least one parameter characterizing a third beamformer associated with a third beamforming technique based on sounding reference signal, SRS, -based beamforming, determine one or more parameters of the common representation corresponding to the third beamformer based on the at least one parameter characterizing the third beamformer. This may, e.g., facilitate to transform an SRS-based beamformer to the common representation according to the disclosure.

In some examples, the instructions, when executed by the at least one processor, cause the device to: determine mapping information, for mapping at least one beamformer associated with a specific one of the plurality of different beamforming techniques to the common representation, use the mapping information for determining the second information.

In some examples, the mapping information may be organized in the form of a table, e.g., mapping table.

In some examples, the mapping information, e.g., in tabular form, may be determined once and may be, e.g., at least temporarily, stored, e.g., for future use, e.g., in the sense of a lookup table. This enables to determine the mapping information once and to perform lookups for retrieving the mapping information as required. In some examples, this may enable to save processing resources.

In some other examples, the mapping information may be determined, e.g., calculated, when required, e.g., dynamically, e.g., in real-time. In other words, in some examples, a real-time determination of the mapping information is possible, wherein, as an example, the determined mapping information is not stored for future use, but, e.g., discarded and determined again if required. In some examples, this may enable to save storage resources.

In some examples, the instructions, when executed by the at least one processor, cause the device to: map the beamformer associated with a specific beamforming technique to a respective beam of a transceiver of the device, map the respective beam of the transceiver of the device to a beam of the common representation based on a correlation between the respective beam of the transceiver and the beam of the common representation. In some examples, this way, it is possible to take into consideration the properties of the transceiver of the device.

In some examples, the instructions, when executed by the at least one processor, cause the device to: determine, for a first beamformer associated with a first beamforming technique based on a precoding matrix indicator, PMI, a channel state information reference signal resource indicator, CRI, and a layer indicator, LI, the respective beam of a transceiver of the device based on a product of a precoding matrix $W_{CRI}$ and a PMI beam $V_{pq}$. In some examples, this enables a particularly efficient determination of the beam of the transceiver.

In some examples, the instructions, when executed by the at least one processor, cause the device to: receive a request for the second information, e.g., from at least one further device, wherein the request comprises at least one of a) the first information, or b) an identifier, determine the second information, transmit a response to the request, the response comprising at least the second information and, optionally, the identifier. In some examples, this enables to provide the at least one further device with the second information characterizing the beamformer using the common representation according to the disclosure.

Some examples relate to a method for a device for a wireless communication system, the method comprising: receiving first information characterizing one or more parameters of a beamformer associated with a specific beamforming technique of a plurality of different beamforming techniques, determining, based at least one the first information, second information characterizing the beamformer using a common representation for different beamformers associated with respective different beamforming techniques.

Some examples relate to an apparatus for a device for a wireless communication system, the apparatus comprising means for: receiving first information characterizing one or more parameters of a beamformer associated with a specific beamforming technique of a plurality of different beamforming techniques, determining, based at least one the first information, second information characterizing the beamformer using a common representation for different beamformers associated with respective different beamforming techniques.

In some examples, the means for receiving the first information and for determining the second information may, e.g., comprise at least one processor, and at least one memory storing instructions that, when executed by the at least one processor, cause the apparatus to perform the aforementioned aspects of determining and performing.

In some examples, the means for receiving the first information and for determining the second information may, e.g., comprise circuitry configured to perform the aforementioned aspects of receiving the first information and determining the second information.

Some examples relate to an apparatus for a device for a wireless communication system, the apparatus comprising at least one processor, and at least one memory storing instructions that, when executed by the at least one processor, cause the device to: transmit first information characterizing one or more parameters of a beamformer associated with a specific beamforming technique of a plurality of different beamforming techniques, receive second information characterizing the beamformer using a common representation for different beamformers associated with respective different beamforming techniques. In some examples, the device may be an Open-Radio Access Network Distributed Unit (O-DU). In some examples, the first information may be transmitted to an apparatus or device associated with, e.g., for, a Near-RT RIC, e.g., an application, e.g., xApp, performing at least some aspects of the disclosure.

In some examples, the instructions, when executed by the at least one processor, cause the device to: transmit a request for the second information, wherein the request comprises at least one of a) the first information, or b) an identifier, receive a response to the request, the response comprising at least the second information and, optionally, the identifier. Some examples relate to a method for a device for a wireless communication system, comprising: transmitting first information characterizing one or more parameters of a beamformer associated with a specific beamforming technique of a plurality of different beamforming techniques, receiving second information characterizing the beamformer using a common representation for different beamformers associated with respective different beamforming techniques.

Some examples relate to an apparatus for a device for a wireless communication system, comprising means for: transmitting first information characterizing one or more parameters of a beamformer associated with a specific beamforming technique of a plurality of different beamforming techniques, receiving second information characterizing the beamformer using a common representation for different beamformers associated with respective different beamforming techniques.

In some examples, the means for transmitting the first information and receiving the second information may, e.g., comprise at least one processor, and at least one memory storing instructions that, when executed by the at least one processor, cause the apparatus to perform the aforementioned aspects of determining and performing.

In some examples, the means for transmitting the first information and receiving the second information may, e.g., comprise circuitry configured to perform the aforementioned aspects of receiving the first information and determining the second information.

Some examples relate to a wireless communication system comprising at least one apparatus according to the disclosure.

Some examples relate to a computer program comprising instructions which, when executed by an apparatus, cause the apparatus to perform the method according to the disclosure.

Some examples relate to a computer-readable storage medium, for example a non-transitory computer-readable storage medium, comprising the computer program according to the disclosure.

Some examples relate to a data carrier signal carrying and/or characterizing the computer program according to the disclosure.

**Brief Description of the Figures**

Fig. 1A        schematically depicts a block diagram according to some examples,

Fig. 1B        schematically depicts a block diagram according to some examples,

Fig. 2         schematically depicts a block diagram according to some examples,

Fig. 3         schematically depicts a flow chart according to some examples,

Fig. 4A        schematically depicts a flow chart according to some examples,

Fig. 4B        schematically depicts a flow chart according to some examples,

Fig. 4C        schematically depicts a flow chart according to some examples,

Fig. 5         schematically depicts a flow chart according to some examples,

Fig. 6         schematically depicts a flow chart according to some examples,

Fig. 7         schematically depicts a flow chart according to some examples,

Fig. 8         schematically depicts a flow chart according to some examples,

Fig. 9A        schematically depicts a block diagram according to some examples,

Fig. 9B        schematically depicts a block diagram according to some examples,

Fig. 10        schematically depicts a flow chart according to some examples,

Fig. 11        schematically depicts a flow chart according to some examples,

Fig. 12A       schematically depicts a block diagram according to some examples,

Fig. 12B    schematically depicts a block diagram according to some examples,

Fig. 13    schematically depicts a block diagram according to some examples,

Fig. 14    schematically depicts a flow-chart according to some examples,

Fig. 15    schematically depicts a flow-chart according to some examples,

Fig. 16    schematically depicts a signaling diagram according to some examples,

Fig. 17    schematically depicts a block diagram according to some examples.

**Description of some Example Embodiments**

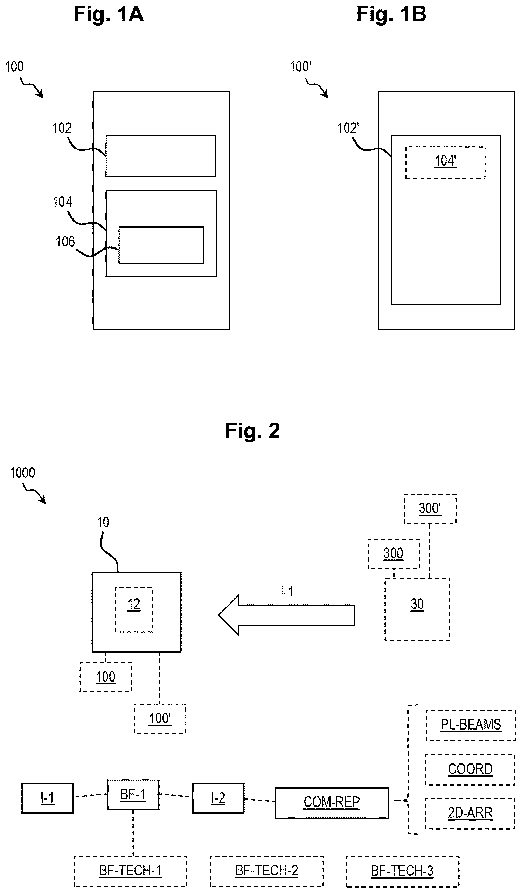

Some examples, see, for example, Fig. 1A, 2, 3, relate to an apparatus 100 for a device 10 for a wireless communication system 1000, the apparatus 100 comprising at least one processor 102, and at least one memory 104 storing instructions 106 that, when executed by the at least one processor 102, cause the device 10 to: receive 200 first information I-1 characterizing one or more parameters of a beamformer BF-1 associated with a specific, e.g., first, beamforming technique BF-TECH-1 of a plurality of different beamforming techniques BF-TECH-1, BF-TECH-2, BF-TECH-3, determine 202, based at least one the first information I-1, second information I-2 characterizing the beamformer BF-1 using a common representation COM-REP for different beamformers associated with respective different beamforming techniques BF-TECH-1, BF-TECH-2, BF-TECH-3. In some examples, this enables to provide a common representation COM-REP for beamformers BF-1, BF-2, BF-3 of different beamforming techniques, thus, e.g., facilitating a processing of data related to the different beamformers.

While in the present examples according to Fig. 2 three different beamforming techniques BF-TECH-1, BF-TECH-2, BF-TECH-3 are depicted, in some examples, and without loss of generality, the principle according to the disclosure may also be applied to more or less than three different beamforming techniques BF-TECH-1, BF-TECH-2, BF-TECH-3.

In some examples, Fig. 2, the wireless communication system 1000 may adhere to and/or may be based on some accepted (and/or planned) standard, such as, e.g. 3G, 4G, 5G, 6G, or some other wireless communication standard.

In some examples, Fig. 2, the device 10 for the wireless communication system 1000 may e.g. comprise or represent at least one of: a) a base station, e.g., gNB, or b) a distributed unit, DU, of a base station, or c) a device or entity for a Near-RT RIC (Near Real Time RAN Intelligent Controller), or d) a terminal device, e.g., user equipment, or e) another device for a wireless communication system.

In some examples, Fig. 2, the common representation COM-REP is characterized by a plurality of different beams PL-BEAMS and at least one coordinate COORD for identifying a specific beam of the plurality PL-BEAM of different beams. As an example, the common representation COM-REP may, e.g., be characterized by a two-dimensional (2D-) array 2D-ARR of different beams and two coordinates, collectively denoted by the reference sign COORD of Fig. 2, for identifying a specific beam of the plurality PL-BEAMS of different beams. In some examples, the plurality PL-BEAMS of different beams, e.g., the 2D-array of different beams, may be denoted as a "dictionary of beams".

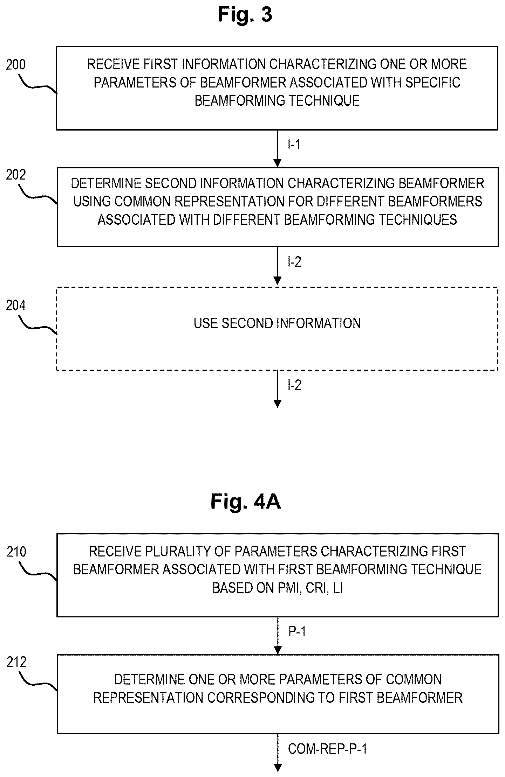

In some examples, Fig. 3, after determination 202 of the second information I-2, the second information I-2 may be used, see the optional block 204, e.g., for evaluating angular information associated with at least one device of the wireless communication system 1000.

In some examples, Fig. 4A, the instructions 106, when executed by the at least one processor 102, cause the device 10 to: receive 210 a plurality P-1 of parameters characterizing a first beamformer BF-1 associated with a first beamforming technique BF-TECH-1 based on a precoding matrix indicator, PMI, a channel state information reference signal resource indicator, CRI, and a layer indicator, LI, determine 212 one or more parameters COM-REP-P-1 of the common representation COM-REP corresponding to the first beamformer BF-1 based on the plurality of parameters P-1 characterizing the first beamformer BF-1. This may, e.g., facilitate to transform a PMI-based beamformer BF-1 to the common representation COM-REP according to the disclosure, thus, e.g., enabling to process information associated with the PMI-based beamformer BF-1 together with information associated with beamformers of other types, which, in some examples, may also be transformed into the common representation according to the disclosure.

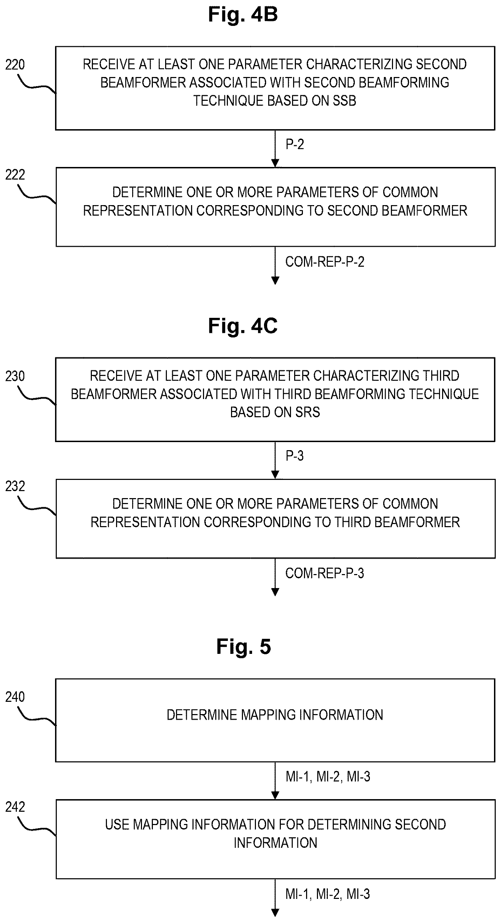

In some examples, Fig. 4B, the instructions 106, when executed by the at least one processor 102, cause the device 10 to: receive 220 at least one parameter P-2 characterizing a second beamformer BF-2 associated with a second beamforming technique BF-tech-2 based on synchronization signal burst, SSB, -based beamforming, determine 222 one or more parameters COM-REP-2 of the common representation COM-REP corresponding to the second beamformer BF-2 based on the at least one parameter P-2 characterizing the second beamformer BF-2. This may, e.g., facilitate to transform an SSB-based beamformer to the common representation according to the disclosure.

In some examples, Fig. 4C, the instructions 106, when executed by the at least one processor 102, cause the device 10 to: receive 230 at least one parameter P-3 characterizing a third beamformer BF-3 associated with a third beamforming technique BF-TECH-3 based on sounding reference signal, SRS, -based beamforming, determine one or more parameters COM-REP-3 of the common representation COM-REP corresponding to the third beamformer BF-3 based on the at least one parameter P-3 characterizing the third beamformer BF-3. This may, e.g., facilitate to transform an SRS-based beamformer to the common representation according to the disclosure.

In some examples, Fig. 5, the instructions 106, when executed by the at least one processor 102, cause the device 10 to: determine 240 mapping information MI-1, MI-2, MI-3, for mapping at least one beamformer BF-1, BF-2, BF-3 associated with a specific one of the plurality of different beamforming techniques BF-TECH-1, BF-TECH-2, BF-TECH-3 to the common representation COM-REP, use 242 the mapping information MI-1, MI-2, MI-3 for determining the second information I-2.

In some examples, the mapping information MI-1, MI-2, MI-3 may be organized in the form of a table, e.g., mapping table.

In some examples, the mapping information MI-1, MI-2, MI-3, e.g., in tabular form, may be determined once and may be, e.g., at least temporarily, stored, e.g., for future use, e.g., in the sense of a lookup table. This enables to determine the mapping information once and to perform lookups for retrieving the mapping information as required. In some examples, this may enable to save processing resources.

In some other examples, the mapping information MI-1, MI-2, MI-3 may be determined, e.g., calculated, when required, e.g., dynamically, e.g., in real-time. In other words, in some examples, a real-time determination of the mapping information MI-1, MI-2, MI-3 is possible, wherein, as an example, the determined mapping information is not stored for future use, but is, e.g., discarded and determined again if required. In some examples, this may enable to save storage resources.

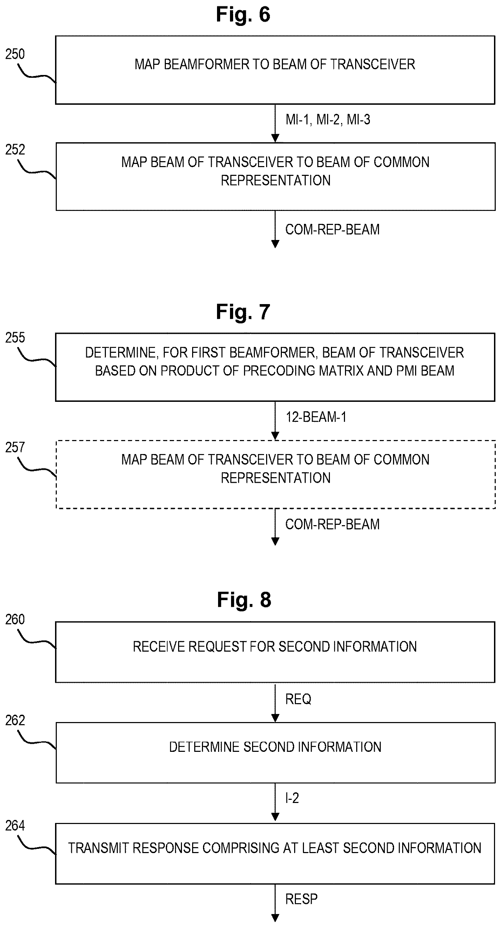

In some examples, Fig. 6, the instructions 106, when executed by the at least one processor 102, cause the device 10 to: map 250 the beamformer BF-1 associated with a specific beamforming technique BF-TECH-1 to a respective beam 12-BEAM of a transceiver 12 (Fig. 2) of the device 10, map 252 (Fig. 6) the respective beam 12-BEAM of the transceiver 12 of the device 10 to a beam COM-REP-BEAM of the common representation COM-REP based on a correlation between the respective beam 12-BEAM of the transceiver 12 and the beam COM-REP-BEAM of the common representation. In some examples, this way, it is possible to take into consideration the properties of the transceiver 12 of the device.

In some examples, Fig. 7, the instructions 106, when executed by the at least one processor 102, cause the device 10 to: determine 255, for a first beamformer BF-1 associated with a first beamforming technique BF-TECH-1 based on a precoding matrix indicator, PMI, a channel state information reference signal resource indicator, CRI, and a layer indicator, LI, the respective beam 12-BEAM of a transceiver 12 of the device 10 based on a product of a precoding matrix $W_{CRI}$ and a PMI beam $V_{pq}$. In some examples, this enables a particularly efficient determination of the beam of the transceiver.

In some examples, Fig. 8, the instructions 106, when executed by the at least one processor 102, cause the device 10 to:
receive 260 a request REQ for the second information I-2, e.g., from at least one further device 30 (Fig. 2), wherein the request REQ comprises at least one of a) the first information I-1, or b) an identifier, determine 262 the second information I-2, transmit 264 a response RESP to the request REQ, the response RESP comprising at least the second information I-2 and, optionally, the identifier. In some examples, this enables to provide the at least one further device 30 with the second information I-2 characterizing the beamformer using the common representation COM-REP according to the disclosure.

Some examples, Fig. 3, relate to a method for a device 10 for a wireless communication system 1000, the method comprising: receiving 200 first information I-1 characterizing one or more parameters of a beamformer associated with a specific beamforming technique of a plurality of different beamforming techniques, determining 202, based at least one the first information I-2, second information I-2 characterizing the beamformer using a common representation for different beamformers associated with respective different beamforming techniques.

Some examples, Fig. 1B, relate to an apparatus 100' for a device 10 for a wireless communication system 1000, the apparatus 100' comprising means 102' for: receiving 200 first information characterizing one or more parameters of a beamformer associated with a specific beamforming technique of a plurality of different beamforming techniques, determining 202, based at least one the first information, second information characterizing the beamformer using a common representation for different beamformers associated with respective different beamforming techniques.

In some examples, Fig. 1B, the means 102' for receiving the first information and for determining the second information may, e.g., comprise at least one processor 102 (see, for example, Fig. 1A), and at least one memory 104 storing instructions 106 that, when executed by the at least one processor 102, cause the apparatus 100' to perform the aforementioned aspects of receiving and determining.

In some examples, Fig. 1B, the means 102' for receiving the first information and for determining the second information may, e.g., comprise circuitry 104' configured to perform the aforementioned aspects of receiving the first information and determining the second information.

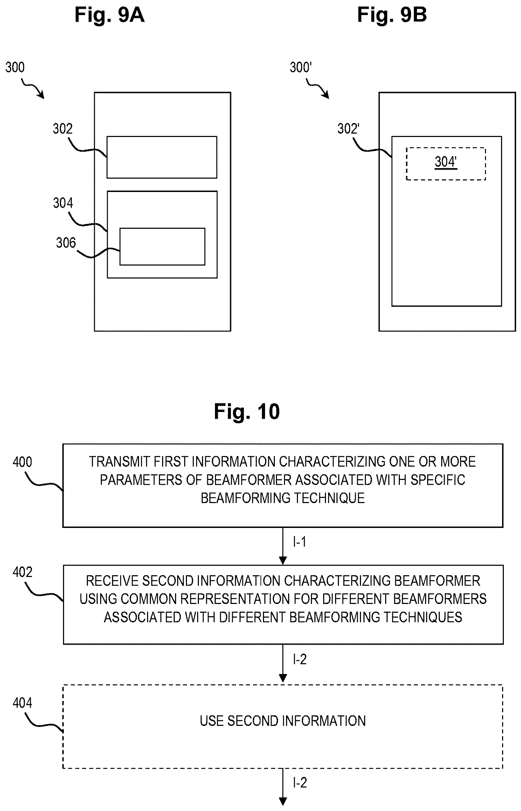

Some examples, see, for example, Fig. 9A, 2, 10, relate to an apparatus 300 for a device 30 for a wireless communication system 1000, the apparatus 300 comprising at least one processor 302, and at least one memory 304 storing instructions 306 that, when executed by the at least one processor 302, cause the device 30 to: transmit 400 first information I-1 characterizing one or more parameters of a beamformer associated with a specific beamforming technique of a plurality of different beamforming techniques, receive 402 second information characterizing the beamformer using a common representation for different beamformers associated with respective different beamforming techniques. In some examples, Fig. 2, the device 30 may be an Open-Radio Access Network Distributed Unit (O-DU). In some examples, the first information may be transmitted to an apparatus 100 or device associated with, e.g., for, a Near-RT RIC, e.g., an application, e.g., xApp, performing at least some aspects of the disclosure.

The optional block 404 of Fig. 10 symbolizes using the second information.

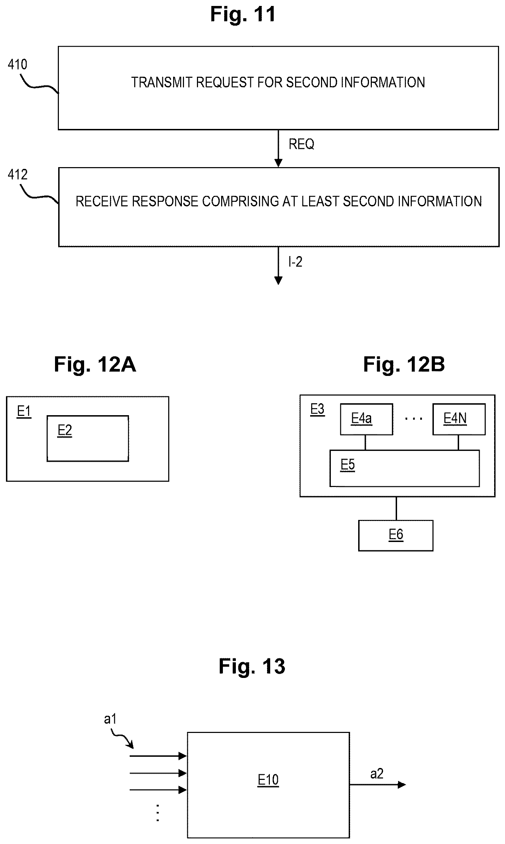

In some examples, Fig. 11, the instructions 306, when executed by the at least one processor 302, cause the device 30 to: transmit 410 a request REQ for the second information I-2, wherein the request REQ comprises at least one of a) the first information I-1, or b) an identifier, receive 412 a response RESP to the request REQ, the response RESP comprising at least the second information I-2 and, optionally, the identifier.

Some examples, Fig. 10, relate to a method for a device 30 for a wireless communication system 1000, comprising: transmitting 400 first information characterizing one or more parameters of a beamformer associated with a specific beamforming technique of a plurality of different beamforming techniques, receiving 402 second information characterizing the beamformer using a common representation for different beamformers associated with respective different beamforming techniques.

Some examples, Fig. 9B, relate to an apparatus 300' for a device 30 for a wireless communication system 1000, comprising means 302' for: transmitting 400 first information characterizing one or more parameters of a beamformer associated with a specific beamforming technique of a plurality of different beamforming techniques, receiving 402 second information characterizing the beamformer using a common representation for different beamformers associated with respective different beamforming techniques.

In some examples, Fig. 9B, the means 302' for transmitting the first information and receiving the second information may, e.g., comprise at least one processor 302 (see, for example, Fig. 9A), and at least one memory 304 storing instructions 306 that, when executed by the at least one processor 302, cause the apparatus 300' to perform the aforementioned aspects of transmitting 400 and receiving 402.

In some examples, Fig. 9B, the means 302' for transmitting 400 the first information and receiving 402 the second information may, e.g., comprise circuitry 304' configured to perform the aforementioned aspects of transmitting 400 and receiving 402.

Some examples, Fig. 2, relate to a wireless communication system 1000 comprising at least one apparatus 100, 100', 300, 300' according to the disclosure.

In some examples, the principle according to the embodiments may, e.g., be used for a base station, e.g., gNB, which may use different beamforming methods or techniques, like PMI and/or SSB and/or SRS- based beamforming, e.g., for different terminal devices, e.g., UE. In some examples, e.g., in beamforming-enabled gNBs, abstract angular information associated with a UE (like indices of a serving beam) can be useful in many scenarios such as CSI prediction, future beamformer prediction, MU-MIMO pairing, SCell (Secondary Cell) selection in CA (Carrier Aggregation), etc. In some examples, the abstract angular information associated with the UE may, e.g., be used for and/or by one or more applications, e.g., associated with at least one of these scenarios.

However, in some conventional approaches, a resolution and/or dimension of the different beamformers may vary, e.g., with the different beamforming methods or techniques BF-TECH-1, BF-TECH-2, ..., respectively. In view of this, using the principle according to the disclosure may enable to provide a common framework which can support same beam resolution and dimension, e.g., with uniform beam indexing, e.g., for the different beamforming methods or techniques.

As mentioned above, in some examples, different beamforming methods may, e.g., include PMI and/or SSB and/or SRS- based beamforming. In some examples, different cells (e.g., even within a same gNB) may be configured to use different beamforming methods. While in some examples at least some, for example each, of these different beamforming methods implicitly capture angular and/or directional information associated with radio frequency propagation paths from a transmitter to a receiver, e.g., of a specific UE, the angular and/or directional information may be captured and/or handled in comparatively different ways, such as, e.g., in different representation spaces and/or in different dimensions and/or in different resolutions, etc.

In some examples, the angular and/or directional information may, e.g., be used for performing predictions, based, e.g., on artificial intelligence (AI), e.g., machine learning (ML), e.g., for predicting various channel-related properties of the UE, MU-MIMO pairing, SCell selection in CA, etc.

However, given the variety of different beamforming methods, in some conventional approaches, it would be necessary to train a corresponding variety of AI/ML models or design a respective number of applications, each one corresponding to a respective one of the different beamforming methods. In some conventional approaches, this may incur complexity of model life cycle management in AI/ML applications and/or memory & compute resource wastage in other applications.

In view of this, the principle according to the disclosure enables to devise, inter alia, a method that facilitates efficient applications exploiting angular information, e.g., about a UE, e.g., without incurring the comparatively high compute & memory costs and application life cycle management complexity for each different BF method, as required by some conventional approaches.

Specifically, the principle according to the disclosure enables to bring different beamformers of different resolutions and/or dimensions to a same dimension and/or resolution, e.g., using the common representation COM-REP. In some examples, for this purpose, a module or entity called "common beamformer framework" may be provided, which, in some examples may comprise at least a part of the functionality of the apparatus 100, 100' (also see Fig. 1, 2). In some examples, aspects of the Common Beamformer Framework may, e.g., be provided, e.g., instantiated, in, e.g., inside, a gNB, e.g., in a DU of a gNB, also see Fig. 12A explained further below. In some other examples, however, aspects of the Common Beamformer Framework may, e.g., be provided as an application, e.g., xApp, e.g., at a Near-RT RIC, which may have an interface to the gNB/DU, also see Fig. 12B explained further below.

Fig. 12A schematically depicts further aspects according to some example embodiments. Element E1 symbolizes a gNB or a distributed unit, DU, of a gNB. Element E2 symbolizes aspects of the common beamformer framework as can be provided using the principle according to the disclosure. As an example, element E2 may comprise at least a part of the functionality of the apparatus 100, 100' (also see Fig. 1, 2). In other words, in some examples, aspects E2 of the common beamformer framework according to the disclosure may be provided in the gNB or the DU of a gNB, respectively.

Fig. 12B schematically depicts further aspects according to some example embodiments. Element E3 symbolizes a Near-RT RIC, elements E4a, ..., E4N symbolize applications, e.g., xApps, associated with, e.g., running on, the Near-RT RIC E3, and element E5 symbolizes aspects E2 of the common beamformer framework according to the disclosure, e.g., at least similar to element E2 of Fig. 12A. Element E6 symbolizes an Open Radio Access Network (O-RAN) Distributed Unit, O-DU, which may be connected to the Near-RT RIC E3, e.g., via an E2 interface.

Fig. 13 schematically depicts further aspects of the common beamformer framework according to the disclosure. Element E10 symbolizes the common beamformer framework, e.g., at least similar to element E2 of Fig. 12A, and the arrows collectively denoted with reference sign a1 symbolize input information or parameters that may, in some examples, be provided to the common beamformer framework. In some examples, the input information a1 may comprise at least one of: a) PMI, or b) CRI, or c) LI, or d) an SSB beam index, or e) an SRS beam index. Arrow a2 symbolizes an output of the common beamformer framework E10, the output a2 characterizing a common representation COM-REP (Fig. 2), e.g., in the form of one or more coordinates, for example two coordinates, e.g., (l, m), for identifying a specific beam out of the plurality PL-BEAMS of beams of the common representation COM-REP.

In other words, in some examples, element E10 may take as input a set of values that represent, e.g., characterize, a beamformer used for a specific UE and may convert the beamformer from one of multiple beamforming methods, e.g., to produce as output a2 a common representation of the beamformer using the dictionary of beams.

In some examples, an algorithm can be provided that achieves a conversion to the common representation for a plurality of, e.g., typically used, beamforming methods. As a first step in the algorithm, beamformers of lower dimension may be up converted to a dimension of the dictionary of beams, also see the two-dimensional array 2D-ARR of beams of Fig. 2. In some examples, the dictionary of beams may represent a set of beamformers of a certain, e.g., predetermined or tunable, e.g., configurable, resolution and dimension. In the next step, in some examples, a dictionary beam may be selected which points to the same direction as that of the original beamformer and its azimuth and elevation beam coordinates or indices *l,m,* respectively, may be used for the common representation COM-REP. In some examples, this approach may harmonize the dimension and resolution of the beamformers across different beamforming methods or techniques BF-TECH-1, BF-TECH-2, ....

In some examples, having a common, e.g., harmonized, framework of UE's abstract angular information may eliminate redesigning and/or adapting an application to multiple beamforming methods. In some examples, the proposed method does not require any online computation as it may be provided as a mapping table-based solution where one or more mapping tables are determined, e.g., computed, e.g., offline, e.g., for once. However, in some examples, an online computation, e.g., a dynamic determination of a mapping from a beamformer of a specific beamforming technique to its common representation COM-REP is also possible.

In the following, a brief description of various beamforming methods as can be used with the principle of the disclosure according to some examples is provided.

In some examples, PMI based beamforming ("PMI-BF") may be used. In this beamforming method, a UE may measure CSI-RS signals transmitted by a gNB, e.g., in at least some, for example all, configured resource sets (as, e.g., identified by a CSI-RS Resource Indicator (CRI)). In some examples, the UE may select a best CRI and feedback the PMI which contains directional information of the UE, and a Layer Indicator (LI) which indicates a stronger direction among the PMI layers. In some examples, based on the UE's feedback, the gNB may compute a PDSCH precoder using PMI and the CRI. In some examples, the resolution (e.g., area covered by a beam or width of the beam) may depend on a number of CSI-RS resource sets and a number of CSI-RS ports.

In some examples, SSB-based beamforming ("SSB-BF") may be used, wherein a UE measures all the configured SSB beams and reports a best SSB beam. In some examples, the number of SSB beams supported by a gNB is implementation specific. In some examples, there are less beams in SSB-BF, compared to PMI-BF and SRS-BF (see further below for details). This means that the SSB beams may be wider, e.g., with less spatial, e.g., angular, resolution. Thus, in other words, in some examples, an SSB beam can be interpreted to indicate a coarse direction of the UE. In some examples, a gNB may use an SSB beam for a PDSCH precoder.

In some examples, SRS-based beamforming ("SRS-BF") may be used, which is based on an SRS signal transmitted by the UE. In some examples, in this method, a gNB may estimate an SRS channel in an uplink (UL) and may select appropriate beamformers/beams, e.g., for PDSCH. In some examples, these beamformers may be selected from a grid of beams (GoB). In some examples, the number of beams is designing specific and/or proprietary information which influences the resolution of the beams. In some examples, SRS-BF may have a comparatively large number of beams and higher resolution, as compared to SSB-BF.

As can be seen, the beamformers in different beamforming methods or techniques, respectively, may depend on a design and/or configurations specific to those different beamforming methods. In some examples, the principle of the disclosure enables to provide a common denominator for the beamformers of different beamforming methods, e.g., in the form of the common representation, e.g., using a dictionary of beams or beam dictionary, and, for example, two coordinates to identify a specific beam of the beam dictionary.

In some examples, a common framework for beamformers can, e.g., be achieved if a plurality, e.g., all of the beams/beam indices of different beamforming methods are mapped to a single set of beams as represented by the dictionary beams.

In some examples, the dictionary beams may cover a certain area or angle, respectively, e.g., sector, with a selected (e.g., predetermined or tunable (configurable), e.g., dependent on different scenarios such as rural environment or dense scenario, e.g. downtown) beam resolution, and the beams of the common representation or framework may be identified with, e.g., two coordinates, e.g., representing their corresponding Azimuth and Elevation angles, e.g., represented by orientation co-ordinates (*l,m*). In some examples, the choice of the beam resolution (e.g., the beams' angular width) may be a trade-off between complexity and/or overhead and performance. In some examples, the beam resolution can be made a tunable parameter (e.g., to be adapted to a certain scenario).

In some examples, the dimension of a beamformer (e.g., number of coefficients in the beam vector) may depend on a number of CSI-RS ports (e.g., for PMI-based beamforming) or the number of transceivers 12 (Fig. 2) in a radio (e.g., for SSB-BF and SRS-BF). However, in some examples, the dimension of the beamformer may be max limited by the number of transceivers.

Thus, in some examples, e.g., to support different beamforming methods, the number of transceivers (e.g., "*noOfTRX*") may be chosen as the dimension of the dictionary beams.

In some examples, the design of dictionary beams can be a proprietary solution, e.g., with optional beam tapering (e.g., for reducing side lobes) and/or customization, e.g., specific to a radio unit (RU). In some examples, generic 2D-DFT (discrete Fourier Transform) oversampled beams as provided below may be used. As an example, for a given number of transceivers in horizontal and vertical directions (e.g., $N_1$ and $N_2$), and the oversampling factors in horizontal and vertical directions (e.g., $O_1$ and $O_2$), in some examples, the 2D-DFT beams may be calculated as given below:

$l^{th}$ Horizonal oversampled DFT vector: $v_l = \begin{bmatrix} 1 & e^{\frac{j2\pi l}{N_1 O_1}} & \dots & e^{\frac{j2\pi l(N_1-1)}{N_1 O_1}} \end{bmatrix}^T$ , where $l$ = 0, 1, ... , $N_1 O_1$ - 1

$m^{th}$ Vertical oversampled DFT vector: $u_m = \begin{bmatrix} 1 & e^{\frac{j2\pi m}{N_2 2}} & \dots & e^{\frac{j2\pi m(N_2-1)}{N_2 O_2}} \end{bmatrix}^T$ , where $m$ = 0, 1, ... , $N_2 O_2$ - 1

2D DFT vector of $(v_l, u_m) = v_l \otimes u_m$ (Kronecker product) .

In some examples, mapping tables may be generated for at least one, for example for each, beamforming method. In some examples, these mapping tables may map all beamformers in a specific beamforming method to the common representation COM-REP (Fig. 2), e.g., using the dictionary of beams. In some examples, two steps may be involved in generating such mapping tables.

Step 1: Map, e.g., up-convert, the beamformers of a beamforming method to respective beams of the transceiver 12 (Fig. 2), e.g., "transceiver beams". In some examples, the dimension of a transceiver beam is the same as that of dictionary beams (e.g., *noOfTRX*×1). In some examples, the transformation to transceiver beams is a comparatively simple mapping process, e.g., for SSB-BF and SRS-BF.

In some examples, for PMI-BF, an additional step may be provided for the determination, e.g., computation of transceiver beams. As an example, the computation of transceiver beams for a specific, e.g., $k^{th}$, user, based on PMI-BF, is given further below.

In some examples, aspects of determining a transceiver beam for SSB-BF may comprise one or more of the following aspects: a UE may report the best SSB beam $V_{SSB,k}$ to a gNB. The dimension of $V_{SSB,k}$ is $noOfTRX \times 1$. Since, $V_{SSB,k}$ is already of the same dimension as the transceiver beams, the transceiver beam of user $k$ is $b_k = V_{SSB,k}$.

In some examples, aspects of determining a transceiver beam for SRS-BF may comprise one or more of the following aspects: a gNB may select the best SRS beam $V_{SRS,k}$ from a GoB. The dimension of $V_{SRS,k}$ is $noOfTRX \times 1$. Since, $V_{SRS,k}$ is already of the same dimension as the transceiver beams TRX, the transceiver beam of user $k$ is $b_k = V_{SRS,k}$.

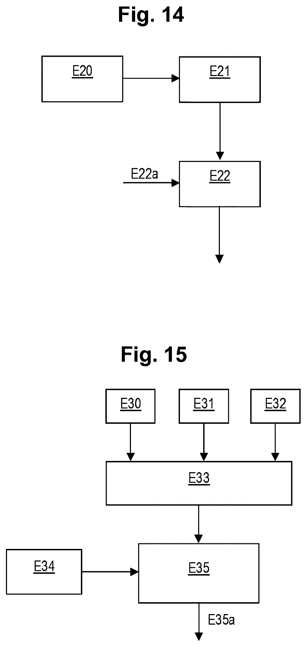

In some examples, also see Fig. 14, aspects of determining a transceiver beam for PMI-BF may comprise one or more of the following aspects: A UE may compute CSI feedback on each CRI (CSI-RS Resource ID) and may report the CSI of the best CRI to the gNB. The angular information of the UE is obtained through the PMI, CRI, LI, and RI of the CSI. The CSI-RS ports of each CRI are precoded with a corresponding precoding matrix $W_{CRI}$. The dimension of $W_{CRI}$ is $noOfTRX \times noOfCsirsPorts$ (e.g., number of CSI-RS ports). PMI is a composite index consisting of indices: $\{i_{11}, i_{12}, i_{13}, i_2\}$. Using $\{i_{11}, i_{12}, i_{13}\}$ and LI, in some examples, horizontal and vertical indices $\{p,q\}$ of the strongest PMI beam $V_{pq}$ may be derived, in which the UE is believed to be located. Here, the dimension of the $V_{pq}$ is $noOfCsirsPorts \times 1$. The transceiver beam of user $k$ may be determined, e.g., computed, as: $b_k = W_{CRI} \times V_{pq}$, also see block 255 of Fig. 7. In Fig. 14, element E20 symbolizes $PMI_k$ $\{i_{11}, i_{12}, i_{13}\}$ and $LI_k$. Element E21 symbolizes determining, e.g., computing, the horizontal and vertical indices $\{p_k,q_k\}$ and the PMI beam $V_{pq,k}$. Element E22 symbolizes determining, e.g., computing, the transceiver beam $b_k = W_{CRI} \times V_{pq}$, also based on $CRI_k$, see element E22a.

In a subsequent, second, step a transceiver beam as obtained according to at least one of the aforementioned aspects may be mapped to a dictionary beam which is having the highest correlation among all the dictionary beams. In some examples, it is assumed there are S many dictionary beams and they are represented as $d_{l1,m1}, d_{l2,m2}, ..., d_{lS,mS}$, where $l_i$ and $m_i$ are the Azimuth and Elevation indices of an i-th dictionary beam, respectively. In some examples, the correlation between the k-th UE's transceiver beam $b_k$ and the dictionary beam $d_{l,m}$, may be determined, e.g., calculated,

as: $|b_k^H d_{l,m}|$ . Let $\hat{l}, \hat{m} = \underset{l,m}{\arg\max} |b_k^H d_{l,m}|$ , then $b_k$ is mapped to $d_{\hat{l},\hat{m}}$.

Thus, in some examples, it can be observed that, transceiver beams associated with the different beamforming methods may be one-to-one mapped with a set of indices. As an example, in PMI-BF, $b_k$ corresponds to *{p, q, CRI}*, whereas in SRS-BF, $b_k$ corresponds to a beam index in the GoB, whereas in SSB-BF, $b_k$ corresponds to the SSB beam index.

Fig. 15 schematically depicts aspects of the abovementioned two-step approach according to some examples. Element E30 symbolizes PMI-BF, element E31 symbolizes SSB-BF, and element E32 symbolizes SRS-BF. Element E33 symbolizes a determination of at least one transceiver beam, e.g., for a k-th user. Element E34 symbolizes the dictionary of beams, e.g., as explained above, and element E35 symbolizes aspects of the abovementioned correlation. Arrow E35a symbolizes information on a UE's angular orientation, e.g., as expressed by a set of coordinates $\hat{l}, \hat{m}$ of the common representation COM-REP.

In some examples, e.g., to avoid a computational complexity of mapping transceiver beams to dictionary beams each time, it may be efficient to maintain (e.g., determine and at least temporarily store) one or more mapping tables for mapping indices of the at least one beamforming method to the dictionary beam indices l, m.

In some examples, aspects of a mapping table for PMI-BF may comprise at least one of the following aspects: Calculate and store a mapping between $b_k$ of each *{p, q, CRI}* and its corresponding common representation of the dictionary beam. In some examples, it can be assumed that there are $N_{PMI}$ many index combinations of *{p, q, CRI}*. Let $d_{l_{p,q,CRI}, m_{p,q,CRI}}$ be the dictionary beam with highest correlation with the TRX beam $b_k$ of *{p, q, CRI}*. Then the common representation for the PMI-BF beamformer with indices *{p, q, CRI}* is $l_{p,q,CRI}, m_{p,q,CRI}$. In some examples, this mapping can be done for every single PMI-BF beamformer, wherein, for example, a mapping table as follows may be obtained:

| PMI-beamforming Indices | Common Representation |
| --- | --- |
| $\{p_1, q_1, CRI_1\}$ | $l_{p1,q1,CRI1}, m_{p1,q1,CRI1}$ |
| $\{p_2, q_2, CRI_2\}$ | $l_{p2,q2,CRI2}, m_{p2,q2,CRI2}$ |
| ⋮ | ⋮ |
| $\{p_{N\_PMI}, q_{N\_PMI}, C_{RIN\_PMI}\}$ | $l_{pN\_PMI, qN\_PMI, CRIN\_PMI}, m_{pN\_PMI, qN\_PMI, CRIN\_PMI}$ |

In some examples, aspects of a mapping table for SSB-BF may comprise at least one of the following aspects: Calculate and store the mapping between $b_k$ of each SSB beam and its corresponding common representation of the dictionary beam. In some examples, it may be assumed that there are $N_{SSB}$ many beams. Let $d_{l_{SSB_i},m_{SSB_i}}$ be the dictionary beam with highest correlation with the transceiver beam $b_k$ of $i^{th}$ SSB beam. Then the common representation for the $i^{th}$ SSB beam is $l_{SSB_i}, m_{SSB_i}$. In some examples, this mapping may be done for every single SSB-BF beamformer.

| SSB-BF Indices | Common Representation |
|---|---|
| 1 | $l_{SSB1}$, $m_{SSB1}$ |
| 2 | $l_{SSB2}$, $m_{SSB2}$ |
| ⋮ | ⋮ |
| $N_{SSB}$ | $l_{SSB\_NSSB}$, $m_{SSB1\_NSSB}$ |

In some examples, aspects of a mapping table for SRS-BF may comprise at least one of the following aspects: Calculate and store a mapping between $b_k$ of each SRS beam and its corresponding common representation of the dictionary beam. In some examples, it is assumed that there are $N_{SRS}$ many beams.

Let $d_{l_{SRS_i},m_{SRS_i}}$ be the dictionary beam with highest correlation with the transceiver beam $b_k$ of $i^{th}$ SRS beam. Then the common representation for the $i^{th}$ SRS beam is $l_{SRS_i}, m_{SRS_i}$. In some examples, this mapping may be done for every single SRS-BF beamformer.

| SRS-BF Indices | Common Representation |
|---|---|
| 1 | $l_{SRS1}$, $m_{SRS1}$ |
| 2 | $l_{SRS2}$, $m_{SRS2}$ |
| ⋮ | ⋮ |
| $N_{SRS}$ | $l_{SRS\_NSRS}$, $m_{SRS\_NSRS}$ |

In the following, an example of how the abovementioned mapping tables may be used to determine a common representation of a specific beamformer is provided. In the examples, it is assumed that PMI-BF indices **[$l_{PMI}$, $m_{PMI}$, CRI]** = **[3,15,3]** are to be mapped to indices of a dictionary beam of the common representation COM-REP (Fig. 2). Firstly, the mapping table for PMI-BF is chosen. Secondly, elements, e.g., a row, of the mapping table for PMI-BF is chosen which comprises, e.g., in a first column, the PMI-BF indices **[3,15,3]**. From the same row, the second column of the mapping table for PMI-BF contains the dictionary beam indices, e.g., **[l,m] = [30,29]**.

In some examples, after looking up the dictionary beam indices, the so determined dictionary beam indices may be provided as input to an application, e.g., as already mentioned above. In some examples, different input information associated with different beamforming techniques may be transformed into the common representation, e.g., using one or more mapping tables, and the common representation may be provided to at least one application, e.g., for processing angular information as represented by the common representation.

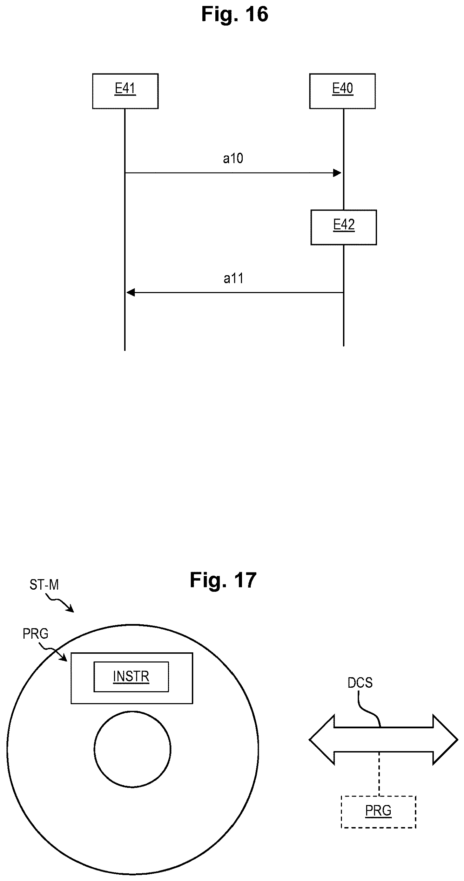

In the following, some examples related to a configuration based on an O-RAN system are explained with reference to Fig. 16. Element E40 symbolizes aspects of the common beamformer framework as, e.g., implemented in a Near-RT RIC of the O-RAN system, whereas element E41 symbolizes an O-DU (O-RAN Distributed Unit). In some examples, a module associated with the common beamformer framework E40 may be instantiated as an xApp in the Near-RT RIC. In some examples, the xApp may take certain type of inputs, e.g., based on a specific beamforming method, and it may provide a (common) beamformer representation $(l,m)$ as an output.

In some examples, Fig. 16, the O-DU E41 may send a request message a10 to the xApp (see block E40), e.g., optionally, with a unique identifier (e.g., "Request ID"), e.g., via an E2 interface. In some examples, the payload of the request message a10 may contain the applicable beamformer attributes (e.g., in the case of PMI-BF: PMI, LI, CRI). In some examples, the xApp E40 determines the common representation, see element E42 of Fig. 16, and may transmit a response a11 to the O-DU, the response comprising the common representation (e.g., coordinates l, m) and, optionally, the Request ID, e.g., via the E2 interface.

In some examples, using the common framework according to the principle of the disclosure, a single application and/or model, e.g., AI- or ML-based model, may be trained for different beamforming methods, as the beamformer inputs are harmonized, e.g., in the form of the common representation. Otherwise, in some conventional approaches, a respective independent model would have to be trained separately, e.g., for each beamforming method.

Some examples, Fig. 17, relate to a computer program PRG comprising instructions INSTR which, when executed by an apparatus 100, 100', 300, 300', cause the apparatus to perform the method according to the disclosure.

Some examples, Fig. 17, relate to a computer-readable storage medium ST-M, for example a non-transitory computer-readable storage medium, comprising the computer program PRG according to the disclosure.

Some examples, Fig. 17, relate to a data carrier signal DCS carrying and/or characterizing the computer program PRG according to the disclosure.

**Claims**

1. An apparatus (100) for a device (10) for a wireless communication system (1000), the apparatus (100) comprising at least one processor (102), and at least one memory (104) storing instructions (106) that, when executed by the at least one processor (102), cause the device (10) to: receive (200) first information (I-1) characterizing one or more parameters of a beamformer (BF-1) associated with a specific beamforming technique (BF-TECH-1) of a plurality of different beamforming techniques (BF-TECH-1, BF-TECH-2, BF-TECH-3), determine (202), based at least on the first information (I-1), second information (I-2) characterizing the beamformer (BF-1) using a common representation (COM-REP) for different beamformers associated with respective different beamforming techniques (BF-TECH-1, BF-TECH-2, BF-TECH-3).

2. The apparatus (100) according to claim 1, wherein the common representation (COM-REP) is **characterized by** a plurality (PL-BEAMS) of different beams and at least one coordinate (COORD) for identifying a specific beam of the plurality of different beams.

3. The apparatus (100) according to any of the preceding claims, wherein the common representation (COM-REP) is **characterized by** a two-dimensional array (2D-ARR) of different beams and two coordinates (COORD) for identifying a specific beam of the plurality (PL-BEAMS) of different beams.

4. The apparatus (100) according to any of the preceding claims, wherein the instructions (106), when executed by the at least one processor (102), cause the device (10) to: receive (210) a plurality (P-1) of parameters characterizing a first beamformer (BF-1) associated with a first beamforming technique (BF-TECH-1) based on a precoding matrix indicator, PMI, a channel state information reference signal resource indicator, CRI, and a layer indicator, LI, determine (212) one or more parameters (COM-REP-P-1) of the common representation (COM-REP) corresponding to the first beamformer (BF-1) based on the plurality of parameters characterizing the first beamformer (BF-1).

5. The apparatus (100) according to any of the preceding claims, wherein the instructions (106), when executed by the at least one processor (102), cause the device (10) to: receive (220) at least one parameter (P-2) characterizing a second beamformer (BF-2) associated with a second beamforming technique (BF-TECH-2) based on synchronization signal burst, SSB, -based beamforming, determine (222) one or more parameters (COM-REP-P-2) of the common representation (COM-REP) corresponding to the second beamformer (BF-2) based on the at least one parameter characterizing the second beamformer (BF-2).

6. The apparatus (100) according to any of the preceding claims, wherein the instructions (106), when executed by the at least one processor (102), cause the device (10) to: receive (230) at least one parameter characterizing a third beamformer (BF-3) associated with a third beamforming technique (BF-TECH-3) based on sounding reference signal, SRS, -based beamforming, determine (232) one or more parameters of the common representation (COM-REP) corresponding to the third beamformer (BF-3) based on the at least one parameter characterizing the third beamformer (BF-3).

7. The apparatus (100) according to any of the preceding claims, wherein the instructions (106), when executed by the at least one processor (102), cause the device (10) to: determine (240) mapping information (MI-1, MI-2, MI-3), for mapping at least one beamformer (BF-1) associated with a specific one of the plurality of different beamforming techniques (BF-TECH-1, BF-TECH-2, BF-TECH-3) to the common representation (COM-REP), use (242) the mapping information (MI-1, MI-2, MI-3) for determining the second information (I-2).

8. The apparatus (100) according to any of the preceding claims, wherein the instructions (106), when executed by the at least one processor (102), cause the device (10) to: map (250) the beamformer (BF-1) associated with a specific beamforming technique (BF-TECH-1) to a respective beam (12-BEAM) of a transceiver (12) of the device (10), map (252) the respective beam (12-BEAM) of the transceiver (12) of the device (10) to a beam (COM-REP-BEAM) of the common representation (COM-REP) based on a correlation between the respective beam (12-BEAM) of the transceiver (12) and the beam (COM-REP-BEAM) of the common representation (COM-REP);
determine (255), for a first beamformer (BF-1) associated with a first beamforming technique (BF-TECH-1) based on a precoding matrix indicator, PMI, a channel state information reference signal resource indicator, CRI, and a layer indicator, LI, the respective beam (12-BEAM-1) of a transceiver (12) of the device (10) based on a product of a precoding matrix $W_{CRI}$ and a PMI beam $V_{pq}$.

9. The apparatus (100) according to any of the preceding claims, wherein the instructions (106), when executed by the at least one processor (102), cause the device (10) to: receive (260) a request (REQ) for the second information (I-2), wherein the request (REQ) comprises at least one of a) the first information (I-1), or b) an identifier (REQ-ID), determine (262) the second information (I-2), transmit (264) a response (RESP) to the request (REQ), the response (RESP) comprising at least the second information (I-2) and, optionally, the identifier (REQ-ID).

10. A method for a device (10) for a wireless communication system (1000), the method comprising: receiving (200) first information (I-1) characterizing one or more parameters of a beamformer (BF-1) associated with a specific beamforming technique (BF-TECH-1) of a plurality of different beamforming techniques (BF-TECH-1, BF-TECH-2, BF-TECH-3), determining (202), based at least on the first information (I-1), second information (I-2) characterizing the beamformer (BF-1) using a common representation (COM-REP) for different beamformers associated with respective different beamforming techniques (BF-TECH-1, BF-TECH-2, BF-TECH-3).

11. An apparatus (300) for a device (30) for a wireless communication system (1000), the apparatus (300) comprising at least one processor (302), and at least one memory (304) storing instructions (306) that, when executed by the at least one processor (302), cause the device (30) to: transmit (400) first information (I-1) characterizing one or more parameters of a beamformer (BF-1) associated with a specific beamforming technique (BF-TECH-1) of a plurality of different beamforming techniques (BF-TECH-1, BF-TECH-2, BF-TECH-3), receive (402) second information (I-2) characterizing the beamformer (BF-1) using a common representation (COM-REP) for different beamformers associated with respective different beamforming techniques (BF-TECH-1, BF-TECH-2, BF-TECH-3).

12. The apparatus (300) according to claim 11, wherein the instructions (306), when executed by the at least one processor (302), cause the device (30) to: transmit (410) a request (REQ) for the second information (I-2), wherein the request (REQ) comprises at least one of a) the first information (I-1), or b) an identifier (REQ-ID), receive (412) a response (RESP) to the request (REQ), the response (RESP) comprising at least the second information (I-2) and, optionally, the identifier (REQ-ID).

13. A method for a device (30) for a wireless communication system (1000), comprising: transmitting (400) first information (I-1) characterizing one or more parameters of a beamformer (BF-1) associated with a specific beamforming technique (BF-TECH-1) of a plurality of different beamforming techniques (BF-TECH-1, BF-TECH-2, BF-TECH-3), receiving (402) second information (I-2) characterizing the beamformer (BF-1) using a common representation (COM-REP) for different beamformers associated with respective different beamforming techniques (BF-TECH-1, BF-TECH-2, BF-TECH-3).

14. A wireless communication system (1000) comprising at least one apparatus (100) according to any of the claims 1 to 9 and at least one apparatus (300) according to any of the claims 11 to 12.

15. A computer program (PRG) comprising instructions (INSTR) which, when executed by an apparatus (100; 100'; 300; 300'), cause the apparatus (100; 100'; 300; 300') to perform the method according to any of the claims 10 or 13.

# Fig. 1A

100

102

104

106

# Fig. 1B

100'

102'

104'

# Fig. 2

1000

10

12

100

100'

I-1

300'

300

30

I-1    BF-1    I-2    COM-REP

PL-BEAMS

COORD

2D-ARR

BF-TECH-1    BF-TECH-2    BF-TECH-3

# Fig. 3

200 — RECEIVE FIRST INFORMATION CHARACTERIZING ONE OR MORE PARAMETERS OF BEAMFORMER ASSOCIATED WITH SPECIFIC BEAMFORMING TECHNIQUE

I-1

202 — DETERMINE SECOND INFORMATION CHARACTERIZING BEAMFORMER USING COMMON REPRESENTATION FOR DIFFERENT BEAMFORMERS ASSOCIATED WITH DIFFERENT BEAMFORMING TECHNIQUES

I-2

204 — USE SECOND INFORMATION

I-2

# Fig. 4A

210 — RECEIVE PLURALITY OF PARAMETERS CHARACTERIZING FIRST BEAMFORMER ASSOCIATED WITH FIRST BEAMFORMING TECHNIQUE BASED ON PMI, CRI, LI

P-1

212 — DETERMINE ONE OR MORE PARAMETERS OF COMMON REPRESENTATION CORRESPONDING TO FIRST BEAMFORMER

COM-REP-P-1

## Fig. 4B

220
RECEIVE AT LEAST ONE PARAMETER CHARACTERIZING SECOND BEAMFORMER ASSOCIATED WITH SECOND BEAMFORMING TECHNIQUE BASED ON SSB

P-2

222
DETERMINE ONE OR MORE PARAMETERS OF COMMON REPRESENTATION CORRESPONDING TO SECOND BEAMFORMER

COM-REP-P-2

## Fig. 4C

230
RECEIVE AT LEAST ONE PARAMETER CHARACTERIZING THIRD BEAMFORMER ASSOCIATED WITH THIRD BEAMFORMING TECHNIQUE BASED ON SRS

P-3

232
DETERMINE ONE OR MORE PARAMETERS OF COMMON REPRESENTATION CORRESPONDING TO THIRD BEAMFORMER

COM-REP-P-3

## Fig. 5

240
DETERMINE MAPPING INFORMATION

MI-1, MI-2, MI-3

242
USE MAPPING INFORMATION FOR DETERMINING SECOND INFORMATION

MI-1, MI-2, MI-3

## Fig. 6

250 — MAP BEAMFORMER TO BEAM OF TRANSCEIVER

↓ MI-1, MI-2, MI-3

252 — MAP BEAM OF TRANSCEIVER TO BEAM OF COMMON REPRESENTATION

↓ COM-REP-BEAM

## Fig. 7

255 — DETERMINE, FOR FIRST BEAMFORMER, BEAM OF TRANSCEIVER BASED ON PRODUCT OF PRECODING MATRIX AND PMI BEAM

↓ 12-BEAM-1

257 — MAP BEAM OF TRANSCEIVER TO BEAM OF COMMON REPRESENTATION

↓ COM-REP-BEAM

## Fig. 8

260 — RECEIVE REQUEST FOR SECOND INFORMATION

↓ REQ

262 — DETERMINE SECOND INFORMATION

↓ I-2

264 — TRANSMIT RESPONSE COMPRISING AT LEAST SECOND INFORMATION

↓ RESP

**Fig. 9A**

300

302

304

306

**Fig. 9B**

300'

302'

304'

**Fig. 10**

400

TRANSMIT FIRST INFORMATION CHARACTERIZING ONE OR MORE PARAMETERS OF BEAMFORMER ASSOCIATED WITH SPECIFIC BEAMFORMING TECHNIQUE

I-1

402

RECEIVE SECOND INFORMATION CHARACTERIZING BEAMFORMER USING COMMON REPRESENTATION FOR DIFFERENT BEAMFORMERS ASSOCIATED WITH DIFFERENT BEAMFORMING TECHNIQUES

I-2

404

USE SECOND INFORMATION

I-2

**Fig. 11**

410

TRANSMIT REQUEST FOR SECOND INFORMATION

REQ

412

RECEIVE RESPONSE COMPRISING AT LEAST SECOND INFORMATION

I-2

**Fig. 12A**

E1

E2

**Fig. 12B**

E3

E4a ··· E4N

E5

E6

**Fig. 13**

a1

E10

a2

## Fig. 14

```
┌──────────┐        ┌──────────┐
│   E20    │───────▶│   E21    │
└──────────┘        └──────────┘
                          │
                          ▼
         E22a      ┌──────────┐
         ────────▶│   E22    │
                   └──────────┘
                          │
                          ▼
```

## Fig. 15

```
┌────────┐   ┌────────┐   ┌────────┐
│  E30   │   │  E31   │   │  E32   │
└────────┘   └────────┘   └────────┘
     │            │            │
     ▼            ▼            ▼
┌────────────────────────────────────┐
│               E33                  │
└────────────────────────────────────┘
                  │
                  ▼
┌────────┐   ┌──────────────┐
│  E34   │──▶│     E35      │
└────────┘   └──────────────┘
                  │
                E35a
                  ▼
```

**Fig. 16**

**Fig. 17**

# EUROPEAN SEARCH REPORT

**Application Number**

EP 25 20 0527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMSUNG: "Codebook design framework for NR MIMO", 3GPP DRAFT; R1-1700912 CODEBOOK DESIGN FRAMEWORK FOR NR MIMO R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 9 January 2017 (2017-01-09), XP051202583, Retrieved from the Internet: URL:http://www.3gpp.org/ftp/tsg_ran/WG1_RL 1/TSGR1_AH/NR_AH_1701/Docs/ [retrieved on 2017-01-09] | 1-4,7, 9-15 | INV. H04B7/06 |
| A | * the whole document * | 5,6,8 | |
| X | ZTE CORPORATION ET AL: "Unified MIMO framework for NR above and below 6GHz", 3GPP DRAFT; R1-166211 UNIFIED MIMO FRAMEWORK FOR NR ABOVE AND BELOW 6GHZ, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Gothenburg, Sweden; 20160822 - 20160826 13 August 2016 (2016-08-13), XP051142292, Retrieved from the Internet: URL:http://www.3gpp.org/ftp/tsg_ran/WG1_RL 1/TSGR1_86/Docs/ [retrieved on 2016-08-13] | 1-4,7, 9-15 | **TECHNICAL FIELDS SEARCHED (IPC)** H04B |
| A | * the whole document * | 5,6,8 | |

The present search report has been drawn up for all claims

| Place of search | Date of completion of the search | Examiner |
|---|---|---|
| Munich | 8 January 2026 | Toumpakaris, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P4C01)